(19) Europäisches Patentamt
European Patent Office
Office européen des brevets

(11) **EP 4 028 299 B1**

(12) **FASCICULE DE BREVET EUROPEEN**

(45) Date de publication et mention
de la délivrance du brevet:
**28.02.2024 Bulletin 2024/09**

(21) Numéro de dépôt: **20764621.7**

(22) Date de dépôt: **27.08.2020**

(51) Classification Internationale des Brevets (IPC):
***B60W 30/12*** *(2020.01)*    ***B62D 15/02*** *(2006.01)*
***G01B 21/26*** *(2006.01)*    ***B62D 6/04*** *(2006.01)*

(52) Classification Coopérative des Brevets (CPC):
**B60W 40/12; B60W 50/14; B62D 6/04;**
**B62D 15/025;** B60W 30/12; G01B 21/26

(86) Numéro de dépôt international:
**PCT/EP2020/073964**

(87) Numéro de publication internationale:
**WO 2021/047916 (18.03.2021 Gazette 2021/11)**

(54) **DÉTECTION DE DÉFAUTS LIÉS À DES ROUES D'UN VÉHICULE AUTOMOBILE EN SITUATION DE ROULAGE**

FESTSTELLUNG VON FEHLERHAFTEM RADVERHALTEN IN EINEM FAHRENDEN FAHRZEUG

DETECTION OF FAULT BEHAVIOR OF WHEELS OF A DRIVEN VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.09.2019 DE 102019124655**

(43) Date de publication de la demande:
**20.07.2022 Bulletin 2022/29**

(73) Titulaire: **Valeo Schalter und Sensoren GmbH**
**74321 Bietigheim-Bissingen (DE)**

(72) Inventeurs:
• **BENMOKHTAR, Rachid**
**9300 Bobigny (FR)**
• **MOUJTAHID, Salma**
**93000 Bobigny (FR)**

(74) Mandataire: **Claassen, Maarten Pieter**
**Valeo Schalter und Sensoren GmbH**
**CDA-IP**
**Laiernstraße 12**
**74321 Bietigheim-Bissingen (DE)**

(56) Documents cités:
**WO-A1-2010/107344    US-A1- 2017 088 176**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine technique

La présente invention concerne de manière générale la détection de défauts liés à des roues d'un véhicule automobile, et plus particulièrement un procédé permettant la détection de tels défauts pendant les situations de roulage du véhicule.

Comme cela apparaîtra par la suite, on entend par défaut lié à des roues tout défaut lié à l'état des roues ou à leurs axes.

### Arrière-plan technologique

Il est connu qu'un défaut au niveau des roues d'un véhicule automobile, tel qu'un défaut d'alignement ou un dégonflage des pneumatiques, peut être à l'origine de l'usure prématurée des pneumatiques mais également induire des problèmes relatifs à la stabilité ou au contrôle et l'usure de la direction pendant les phases de roulage du véhicule. Les défauts liés aux roues peuvent également être à l'origine d'une surconsommation de carburant pour le véhicule automobile.

En outre, un nombre de plus en plus important de véhicules automobiles est équipé de systèmes d'automatisation partielle ou de systèmes d'assistance avancés à la conduite, en particulier de systèmes réalisant, à la place du conducteur, le contrôle latéral du véhicule. On connaît notamment des systèmes dits de maintien ou de guidage dans une voie de circulation qui permettent de déterminer les voies de circulation, par détection notamment des lignes de marquage au sol, puis d'agir sur le système de direction du véhicule automobile afin de lui permettre de suivre une trajectoire fonction des voies de circulation. En pratique, pour une fonctionnalité de maintien du véhicule dans sa voie de circulation, de tels systèmes estiment en temps réel des angles au volant correctifs qui sont appliqués pour permettre au véhicule de suivre une trajectoire prédéfinie, parallèle à la voie de circulation. On conçoit par conséquent que des défauts d'alignement de roues ou de dégonflage de pneumatiques puissent impacter négativement les performances de ces systèmes d'assistance dans le contrôle latéral du véhicule, en termes de stabilité, de sécurité et de comportement.

Or, de tels défauts sont généralement détectés et corrigés seulement lors des visites d'entretien du véhicule automobile. Ainsi, la procédure d'alignement est une procédure standard dans la maintenance automobile lors de laquelle le véhicule automobile est placé sur un banc ou plateforme d'inspection dotée d'équipements dédiés permettant de détecter d'éventuels défauts d'alignement, classiquement en mesurant avec précision les différents angles intervenant dans l'alignement des roues, en particulier :

- l'angle de carrossage, correspondant à l'angle formé par l'inclinaison d'une roue avec la verticale,

- l'angle d'ouverture/de pincement, correspond à l'écart entre la direction des roues et l'axe longitudinal du véhicule,

- et l'angle de chasse, correspondant à l'angle formé entre la verticale et l'axe de pivot de la roue, vue de côté, c'est-à-dire mesuré dans le sens longitudinal.

Ces angles sont alors ajustés pour que les roues d'un véhicule soient parallèles entre elles et perpendiculaires au plan de la route.

Il résulte de ce qui précède un besoin de pouvoir détecter au plus tôt, et pendant les phases de roulage d'un véhicule, la présence d'un défaut lié aux roues de manière à alerter le conducteur de la nécessité d'effectuer rapidement une opération de maintenance.

On connaît du document US 2013/0253767 un procédé et un système pour auto diagnostiquer de possibles dysfonctionnements liés à un véhicule en utilisant un système d'assistance au contrôle latéral équipant le véhicule automobile, et pour alerter en conséquence le conducteur. Plus précisément, le système d'assistance au contrôle latéral comprend classiquement un générateur de trajectoire apte à générer une trajectoire souhaitée pour le véhicule afin que ce dernier se maintienne dans une voie de circulation et un contrôleur de direction apte à fournir aux organes de direction des corrections de direction pour suivre la trajectoire souhaitée. Le système comporte en outre un prédicteur de trajectoires pour prédire une trajectoire suivie activement par le véhicule et un module de dynamique virtuelle modélisant la trajectoire anticipée du véhicule résultant des corrections de direction. Si la trajectoire prédite et la trajectoire anticipée présentent des différences trop importantes traduisant un possible dysfonctionnement, un système de diagnostic est alors activé pour identifier si la cause du possible dysfonctionnement est liée à des conditions environnementales (vent de forte intensité par exemple), à des défauts mécaniques dans les composants du système de direction (par exemple un défaut lié à des roues ou au positionnement d'un capteur d'angle), ou à des défauts liés aux positionnements des capteurs servant à détecter les voies de circulation. Dans ce système néanmoins, il n'est pas possible de déterminer précisément laquelle des deux roues gauche ou droite de la paire de roues directrices du véhicule présente effectivement un défaut, ni de préciser si le type du défaut concerne un dégonflage de pneumatiques ou un défaut d'alignement de roues.

### Résumé de l'invention

La présente invention a pour but de pallier les limitations de l'art antérieur.

Plus précisément, la présente invention a pour objet un procédé de détection de défauts liés à des roues d'un véhicule automobile en situation de roulage, comme défini dans la revendication indépendante 1 ci-jointe, comportant:

- une première étape de détermination automatique d'une première série d'angles au volant correctifs appliqués successivement pendant une première fenêtre temporelle de roulage dudit véhicule automobile sur une première portion de voie de circulation sensiblement rectiligne, lesdits angles au volant correctifs étant appliqués de manière à ce que ledit véhicule suive une trajectoire parallèle à ladite première portion de voie de circulation ;
- une étape de détection automatique de la présence d'un défaut affectant une paire de roues directrices du véhicule automobile, à partir des angles au volant correctifs de la première série ; et, le cas échéant
- une étape d'estimation d'un type de défaut associé au défaut dont la présence a été détectée ;
- une étape d'identification de la roue directrice de ladite paire de roues affectée par ledit défaut ; et
- une étape de génération d'un message d'alerte à l'attention du conducteur du véhicule automobile, ledit message comportant le type de défaut estimé et la roue identifiée comme présentant le défaut.

Selon des modes particuliers de réalisation :

- l'étape de détection automatique peut comprendre une étape de calcul d'une moyenne et d'un écart-type sur les angles au volant correctifs de la première série ;

- la roue directrice affectée par ledit défaut peut être alors identifiée à partir du signe de la moyenne calculée à l'étape de détection automatique;

- l'étape d'estimation d'un type de défaut comporte de préférence une étape de calcul de dérivées temporelles des angles au volant correctifs de ladite première série, le type de défaut étant estimé sur la base d'une comparaison d'une moyenne des dérivées temporelles par rapport à zéro;

- dans un autre mode de réalisation possible, le procédé comporte, suite à une détection de la présence d'un défaut issue de l'étape de détection automatique, une deuxième étape de détermination automatique, d'une deuxième série d'angles au volant correctifs appliqués successivement pendant une deuxième fenêtre temporelle de roulage dudit véhicule automobile sur une deuxième portion de voie de circulation de profil courbe, lesdits angles au volant correctifs étant appliqués de manière à ce que ledit véhicule suive une trajectoire parallèle à ladite deuxième portion de voie de circulation, et une étape de calcul d'une moyenne sur les angles au volant correctifs de la deuxième série;

- la roue directrice affectée par ledit défaut est alors identifiée à partir du signe de la moyenne calculée sur les angles correctifs de la deuxième série ;

- l'étape d'estimation d'un type de défaut peut comporter une étape de calcul de la dérivée temporelle des angles au volant correctifs de ladite deuxième série, le type de défaut étant estimé sur la base d'une comparaison de ladite dérivée temporelle par rapport à zéro ;

- dans un autre mode de réalisation, le procédé peut comporter en outre une étape de désactivation d'un système embarqué d'assistance à la conduite apte à commander un contrôle latéral de la trajectoire du véhicule automobile pendant une phase d'activation dudit système embarqué d'assistance à la conduite ;

- ladite désactivation est par exemple déclenchée sur la base du type de défaut estimé ;

- les angles au volant correctifs appliqués sont de préférence délivrés par ledit système embarqué d'assistance à la conduite pendant la phase d'activation dudit système embarqué d'assistance à la conduite.

**Brève description des dessins**

L'invention sera mieux comprise au vu de la description suivante faite en référence aux figures annexées, dans lesquelles :

- la figure 1 représente un synoptique fonctionnel d'un système embarqué sur un véhicule automobile selon une implémentation possible d'un procédé de détection de défauts liés aux roues du véhicule conforme à l'invention ;

- la figure 2 représente un exemple de trajectoire suivie par un véhicule automobile dont des roues présentent un défaut ;

- la figure 3 représente des étapes susceptibles d'être mises en oeuvre selon un premier mode de réalisation d'un procédé de détection conforme à l'invention ;

- la figure 4 représente des étapes susceptibles d'être mises en oeuvre selon un autre mode de réalisation d'un procédé de détection conforme à l'invention.

**Description de mode(s) de réalisation**

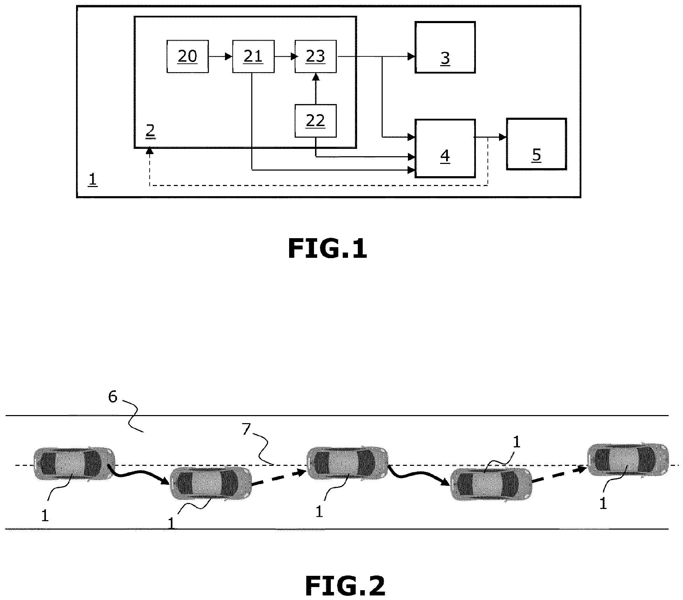

Des modes d'implémentation possibles d'un procédé de détection de défauts liés à des roues d'un véhicule automobile conforme à l'invention vont à présent être décrits, en référence notamment à la figure 1 qui représente un synoptique fonctionnel, dans le contexte non limitatif d'un véhicule automobile 1 équipé d'un système 2 d'assistance à la conduite apte à commander le contrôle latéral de la trajectoire du véhicule automobile.

Pour maintenir le véhicule automobile 1 sur la voie de circulation qu'il emprunte, le système 2 d'assistance à la conduite à contrôle latéral dispose classiquement d'un ou plusieurs capteurs 20 dont les détections vont permettre de déterminer certaines caractéristiques de cette voie de circulation, telles que la largeur de la voie de circulation, son orientation relativement au véhicule et sa courbure, afin d'estimer et suivre une modélisation de la voie de circulation (typiquement la trajectoire formée en suivant le centre de la voie de circulation). Les capteurs utilisés sont par exemple des caméras, des capteurs LIDAR, Radars ou encore des capteurs virtuels, ou plus généralement tout type de capteurs aptes à détecter des lignes de marquage au sol. Un exemple de capteur virtuel serait un logiciel qui lirait des données acquises par d'autres capteurs du véhicule, qui déterminerait sur cette base la position d'objets tels que d'autres voitures ou des rails de sécurité, et qui en déduirait la position de la voie de circulation par rapport au véhicule. A partir des informations délivrées par le ou les capteurs 20, un module électronique 21 du système 2 de contrôle latéral estime les lignes de marquage au sol, éventuellement par fusion de données dans les cas où plusieurs capteurs aptes à détecter des lignes de marquage au sol sont utilisés. Le système 2 dispose également d'un certain nombre d'informations, regroupées sous la référence 22, telles que la vitesse et/ou l'accélération du véhicule automobile 1, et la position du véhicule fourni par un système de navigation embarqué, tel qu'un système GPS, et/ou une cartographie haute définition embarquée. Sur la base de l'ensemble de ces informations, un module électronique 23 de contrôle latéral génère et transmet à un système 3 de contrôle de la colonne de direction du véhicule automobile 1, des angles au volant correctifs à appliquer pour que le véhicule automobile 1 suive automatiquement une trajectoire parallèle à la voie de circulation, généralement la ligne centrale de cette voie de circulation. Le système 3 applique alors directement les corrections d'angles au volant qu'il reçoit. En d'autres termes, le volant du véhicule, lequel contrôle les roues directrices du véhicule, est automatiquement tourné selon les valeurs d'angles correctifs qu'il reçoit.

Le principe de l'invention repose sur le fait que le symptôme principal d'un défaut lié à une roue directrice d'un véhicule automobile est que le véhicule va avoir tendance à dériver vers la droite ou vers la gauche. Cette dérive est d'autant plus visible lorsque le véhicule automobile roule sur une portion de route rectiligne. Dans ces conditions, le système 2 d'assistance à contrôle latéral, lorsqu'il est activé, va détecter ces dérives et être ainsi amené à générer beaucoup plus d'angles au volant correctifs qu'il n'aurait dû le faire pour un véhicule dont les roues directrices ne présentent pas de défaut. Ceci est illustré schématiquement sur la figure 2 qui montre plusieurs positions successives du véhicule automobile 1 roulant sur une portion de voie de circulation 6 rectiligne. On note sur cette figure que le véhicule automobile 1 dérive deux fois vers la droite (comme illustré par les flèches en trait plein) alors qu'il est censé suivre le centre 7 de cette portion de voie de circulation 6 rectiligne. Le module électronique 23 de contrôle latéral va dans ce cas, à chaque dérive détectée, délivrer un angle au volant correctif de manière à ce que le véhicule automobile 1 puisse se recentrer sur la portion de route (comme illustré par les deux flèches en trait pointillé).

Le procédé de détection de défauts liés à des roues directrices du véhicule automobile conforme à l'invention repose sur l'analyse des angles au volant correctifs qui va permettre, comme cela va être détaillé par la suite, non seulement de détecter automatiquement la présence d'un défaut alors que le véhicule est en situation de roulage, mais également d'estimer un type de défaut et d'identifier laquelle des deux roues directrices gauche ou droite est affectée du défaut.

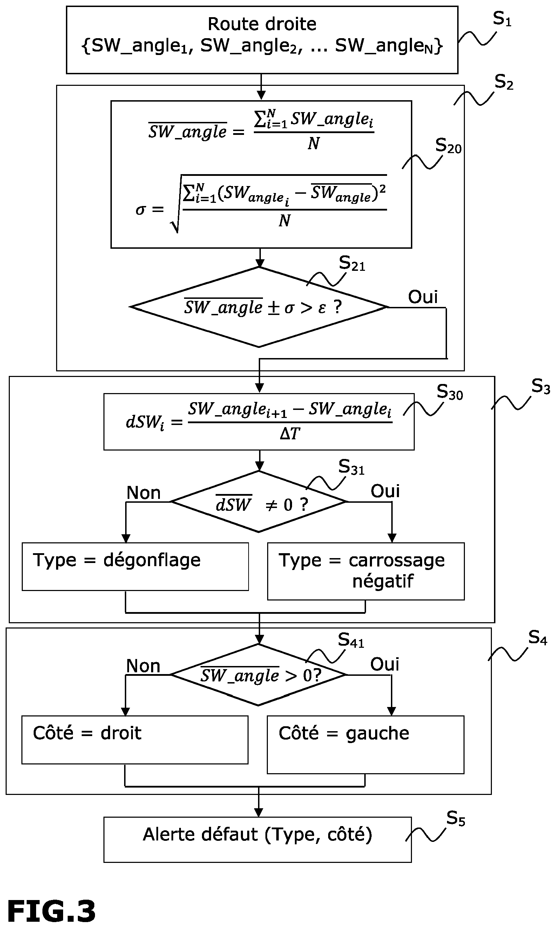

La figure 3 illustre des étapes d'un procédé de détection de défauts liés à une roue droite et/ou gauche d'une paire de roues directrices du véhicule automobile 1 selon un premier mode de réalisation possible conforme à l'invention.

Une première étape $S_1$ du procédé consiste à déterminer automatiquement une première série d'angles au volant correctifs qui sont appliqués successivement pendant une première fenêtre temporelle de roulage du véhicule automobile 1 alors que ce dernier circule sur une première portion de voie de circulation sensiblement rectiligne, pour forcer le véhicule automobile 1 à suivre une trajectoire parallèle à cette première portion de voie de circulation.

Comme on l'a vu précédemment, les angles correctifs sont ici automatiquement déterminés par le module électronique 23 de contrôle latéral, et peuvent donc être délivrés directement pour traitement à un module 4 de détection de défauts liés aux roues (voir figure 1). Le système 2 d'assistance est en outre apte, à partir des informations délivrées par le module électronique 21 et des informations 22 relatives à la cartographie et à la vitesse et/ou l'accélération du véhicule, à identifier que les angles au volant correctifs de cette première série sont bien déterminés alors que le véhicule automobile est sur une portion de route rectiligne. Une condition préalable au déclenchement de l'étape $S_1$ pourra être de vérifier que le véhicule automobile 1 est en train de rouler sur une portion de route sensiblement rectiligne, par exemple en vérifiant que le rayon de courbure de la route ne dépasse pas un certain seuil de courbure, et que cette portion de route restera rectiligne suffisamment longtemps pour permettre de collecter une succession d'angles correctifs. On peut par exemple considérer, pour fixer les idées, que la portion de route doit être sensiblement rectiligne sur environ 200 mètres si le véhicule se déplace à une vitesse inférieure à 50 km/h, ou sur environ 400 mètres si le véhicule se déplace à une vitesse comprise entre 50 et 100 km/h, de manière à pouvoir observer les variations de l'angle au volant correctif et la fréquence des corrections sur une fenêtre temporelle d'environ 15 secondes.

Les angles au volant correctifs de la première série sont alors traités par le module 4 de détection de défauts liés aux roues, lors d'une étape $S_2$ dans le but de détecter automatiquement la présence d'un défaut affectant la paire de roues directrices du véhicule automobile. Pour ce faire, le module 4 peut calculer, lors d'une étape $S_{20}$ la moyenne et l'écart-type associés aux angles au volant correctifs de la première série. Si l'on note {SW_angle$_1$, SW_angle$_2$, ... SW_angle$_N$} l'ensemble de N valeurs d'angles au volant correctifs contenus dans la première série, alors la moyenne $\overline{SW\_angle}$ et l'écart-type $\sigma$ sont déterminées selon les relations suivantes :

$$\overline{SW\_angle} = \frac{\sum_{i=1}^{N} SW\_angle_i}{N}$$

$$\sigma = \sqrt{\frac{\sum_{i=1}^{N}(SW_{angle_i} - \overline{SW_{angle}})^2}{N}}$$

La présence d'un défaut est détectée automatiquement en comparant une combinaison linéaire de la moyenne $\overline{SW\_angle}$ et l'écart-type $\sigma$ à l'incertitude connue $\varepsilon$ du système d'assistance 2. Par exemple, comme illustrée par l'étape $S_{21}$ de la figure 1, la présence d'un défaut est automatiquement détectée par le module 4 de détection de défauts si la relation suivante est remplie :

$$\overline{SW\_angle} \pm \sigma > \varepsilon$$

traduisant le fait que les angles au volant correctifs s'écartent en moyenne d'une valeur supérieure à l'incertitude connue du système.

Si aucun défaut n'est détecté à ce stade, on peut prévoir de reprogrammer la réitération automatique des étapes $S_1$ et $S_2$ à une date ultérieure, par exemple une semaine après.

Dans le cas contraire, le procédé se poursuit par une étape $S_3$ d'estimation du type de défaut associé au défaut dont la présence a été détectée à l'étape $S_2$, et par une étape $S_4$ d'identification de la roue directrice de la paire de roues affectée par ce défaut. Il convient de noter à ce stade que, bien que l'étape $S_4$ soit illustrée sur la figure 3 comme succédant à l'étape $S_3$, l'ordre des deux étapes $S_3$ et $S_4$ peut être interverti. Ces étapes $S_3$, $S_4$ peuvent alternativement être réalisées en parallèle.

Pour procéder à l'étape $S_3$ d'estimation du type de défaut, le module 4 de détection de défaut analyse la vitesse de variation des angles au volant correctifs déterminés à l'étape $S_1$ en calculant par exemple, lors d'une étape $S_{30}$ de calcul, la dérivée temporelle $dSW_i$ à chaque instant des angles au volant correctifs de la première série, selon les relations :

$$dSW = \{dSW_1, dSW_2, ... dSW_{N-1}\}$$

$$dSW_i = \frac{SW\_angle_{i+1} - SW\_angle_i}{\Delta T}$$

Le type de défaut peut alors être estimé sur la base d'une comparaison (étape $S_{31}$) d'une moyenne $\overline{dSW}$ des dérivées temporelles $dSW_i$ par rapport à zéro. Plus précisément, si la moyenne $\overline{dSW}$ des dérivées temporelles $dSW_i$ est égale à zéro (correspondant à une vitesse de variation constante des angles au volant correctifs de la première série), alors le module 4 de détection de défaut déduit que le type de défaut est un dégonflage d'un pneumatique d'une des roues directrices (branche gauche du test effectué à l'étape $S_{31}$). Dans le cas contraire, le module 4 de détection de défaut déduit que le type de défaut concerne un problème d'alignement, et plus précisément un angle de carrossage négatif (roue penchant vers le véhicule) pour l'une des roues directrices (branche droite du test effectué à l'étape $S_{31}$).

La roue directrice affectée par le défaut est identifiée quant à elle à partir du signe de la moyenne $\overline{SW\_angle}$ calculée à l'étape $S_2$ de détection automatique. Plus précisément, si le signe de la moyenne $\overline{SW\_angle}$ est positif, alors la roue affectée par le défaut est la roue directrice gauche (branche droite du test effectué à l'étape $S_{41}$). A l'inverse, si le signe de la moyenne $\overline{SW\_angle}$ est positif, alors la roue affectée par le défaut est la roue directrice droite (branche gauche du test effectué à l'étape $S_{41}$).

A l'issue des étapes $S_3$ et $S_4$, le module 4 de détection peut générer un message d'alerte (étape $S_5$) à l'attention du conducteur du véhicule automobile, ce message comportant avantageusement le type de défaut estimé et la roue identifiée comme présentant le défaut. Ce message est transmis pour diffusion sonore et/ou visuelle sur une interface utilisateur 5 située dans l'habitacle du véhicule automobile 1 (voir figure 1).

Le module 4 peut en outre décider, selon le type de défaut détecté, de désactiver le système 2 d'assistance au contrôle latéral comme indiqué par la commande en pointillés sur la figure 1. En particulier, si le type de défaut est un dégonflage d'un pneumatique pour l'une des roues directrices, il peut être souhaitable de désactiver les fonctionnalités offertes par le contrôle latéral car un dégonflage de pneumatique peut fausser la calibration des capteurs 20 utilisés par le système 2, et par suite, le contrôle automatique de trajectoire. Un défaut lié à l'angle de carrossage négatif aura par contre moins d'impact sur les performances du système 2 d'assistance au contrôle latéral, de sorte qu'il n'est pas nécessaire de désactiver le système 2 dans ce cas. En variante, le contrôle latéral par le système 2 peut être désactivé dès lors que la présence d'un défaut lié à une roue a été détectée.

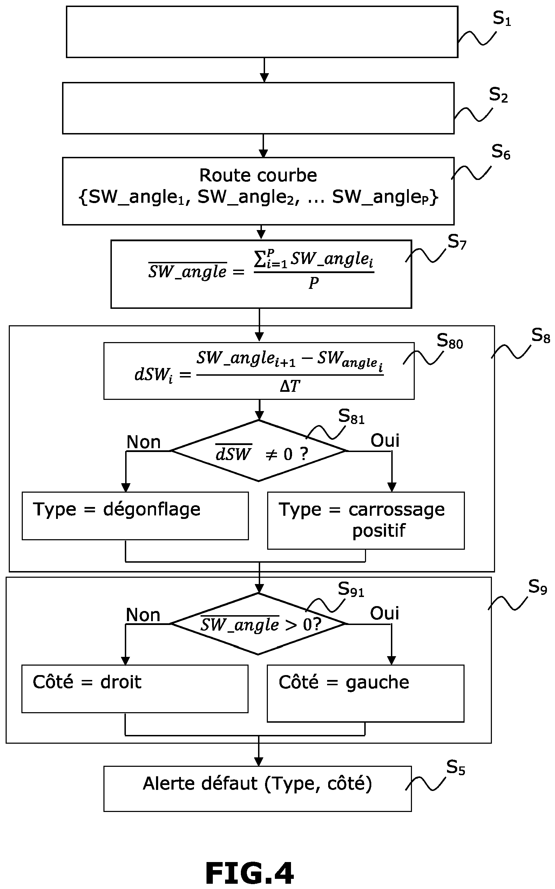

La figure 4 illustre des étapes d'un procédé de détection de défauts liés à une roue droite et/ou gauche d'une paire de roues directrices du véhicule automobile 1 selon un deuxième mode de réalisation possible conforme à l'invention.

Le procédé débute par les mêmes étapes $S_1$ et $S_2$ que celles décrites en référence à la figure 3, à savoir les étapes permettant au module 4 de détection de défaut de détecter la présence d'un défaut à partir de la première série d'angles au volant correctifs collectés alors que le véhicule automobile 1 se déplace sur une première portion de voie de circulation sensiblement rectiligne.

Le procédé de la figure 4 diffère néanmoins de celui décrit à la figure 3 en ce qu'il comprend, dans le cas où, à l'issue de l'étape $S_2$, le module 4 a détecté la présence d'un défaut, un deuxième cycle de mesures, effectué cette fois-ci alors que le véhicule automobile 1 se déplace sur une deuxième portion de voie circulation courbe, à la différence de la première portion de voie de circulation qui était sensiblement rectiligne. La figure 4 montre ainsi, à la suite de l'étape $S_2$, une nouvelle étape $S_6$ de détermination automatique, d'une deuxième série d'angles au volant correctifs appliqués successivement pendant une deuxième fenêtre temporelle de roulage du véhicule automobile 1 alors que ce dernier circule sur une portion de voie de circulation de profil courbe, les angles au volant correctifs étant appliqués de manière à ce que ledit véhicule suive une trajectoire parallèle à cette deuxième portion courbe de voie de circulation.

Comme précédemment, les angles correctifs sont ici automatiquement déterminés par le module électronique 23 de contrôle latéral, et peuvent donc être délivrés directement pour traitement au module 4 de détection de défauts liés aux roues (voir figure 1). Le système 2 d'assistance est en outre apte, à partir des informations du module électronique 21 et des informations 22 relatives à la cartographie et à la vitesse et/ou l'accélération du véhicule, à identifier que les angles au volant correctifs de cette deuxième série sont bien déterminés alors que le véhicule automobile est sur une portion de route courbe. Une condition préalable au déclenchement de l'étape $S_6$ pourra être de vérifier que la portion de route sur laquelle le véhicule automobile 1 est en train de circuler est bien de profil courbe. On peut par exemple vérifier que le rayon de courbure de cette portion de route est supérieur à un seuil de courbure prédéfini, par exemple fixé à 1000 mètres, et que cette portion de route restera courbe suffisamment longtemps pour permettre de collecter une succession d'angles correctifs.

Le type de défaut et l'identification de la roue présentant le défaut sont ensuite déterminés d'une manière similaire aux étapes $S_3$ et $S_4$ décrites ci-avant, à ceci près que les calculs effectués par le module 4 de détection de défaut utilisent à présent les angles au volant correctifs de la deuxième série.

Plus précisément, le module 4 peut calculer, lors d'une étape $S_7$ la moyenne des angles au volant correctifs de la deuxième série. Si l'on note {SW_angle$_1$, SW_angle$_2$, ... SW_angle$_P$} l'ensemble de P valeurs d'angles au volant correctifs contenus dans la deuxième série, alors la moyenne $\overline{SW\_angle}$ est déterminée selon la relation suivante :

$$\overline{SW\_angle} = \frac{\sum_{i=1}^{P} SW\_angle_i}{P}$$

Le procédé se poursuit par une étape $S_8$ d'estimation du type de défaut associé au défaut dont la présence a été détectée à l'étape $S_2$, et par une étape $S_9$ d'identification de la roue directrice de la paire de roues affectée par ce défaut. Ici encore, bien que l'étape $S_9$ soit illustrée sur la figure 3 comme succédant à l'étape $S_8$, l'ordre des deux étapes $S_8$ et $S_9$ peut être interverti. Ces étapes $S_8$, $S_9$ peuvent alternativement être réalisées en parallèle.

Ces étapes $S_8$ et $S_9$ sont très similaires aux étapes $S_3$ et $S_4$ du mode de réalisation de la figure 3.

Ainsi, pour procéder à l'étape $S_8$ d'estimation du type de défaut, le module 4 de détection de défaut analyse la vitesse de variation des angles au volant correctifs déterminés à l'étape $S_6$ en calculant par exemple, lors d'une étape $S_{80}$ de calcul, la dérivée temporelle $dSW_i$ à chaque instant des angles au volant correctifs de la deuxième série, selon les relations :

$$dSW = \{dSW_1, dSW_2, ... dSW_{P-1}\}$$

$$dSW_i = \frac{SW\_angle_{i+1} - SW\_angle_i}{\Delta T}$$

Le type de défaut peut alors être estimé sur la base d'une comparaison (étape $S_{81}$) de la moyenne $\overline{dSW}$ des dérivées temporelles $dSW_i$ par rapport à zéro. Plus précisément, si la moyenne $\overline{dSW}$ des dérivées temporelles $dSW_i$ est égale à zéro (correspondant à une vitesse de variation constante des angles au volant correctifs de la deuxième série), alors le module 4 de détection de défaut déduit que le type de défaut est un dégonflage d'un pneumatique d'une des roues directrices (branche gauche du test effectué à l'étape $S_{81}$). Dans le cas contraire, le module 4 de détection de défaut déduit que le type de défaut concerne un problème d'alignement, et plus précisément un angle de carrossage positif (roue penchant vers l'extérieur du véhicule) pour l'une des roues directrices (branche droite du test effectué à l'étape $S_{81}$).

La roue directrice affectée par le défaut est identifiée quant à elle à partir du signe de la moyenne

$\overline{SW\_angle}$ calculée à l'étape $S_7$. Plus précisément, si le signe de la moyenne $\overline{SW\_angle}$ est positif, alors la roue affectée par le défaut est la roue directrice gauche (branche droite du test effectué à l'étape $S_{91}$). A l'inverse, si le signe de la moyenne $\overline{SW\_angle}$ est positif, alors la roue affectée par le défaut est la roue directrice droite (branche gauche du test effectué à l'étape $S_{91}$).

A l'issue des étapes $S_8$ et $S_9$, on retrouve, comme dans le cas de la figure 3, l'étape $S_5$ lors de laquelle le module 4 de détection va générer un message d'alerte à l'attention du conducteur du véhicule automobile, ce message comportant avantageusement le type de défaut estimé à l'étape $S_8$, et la roue identifiée à l'étape $S_9$ comme présentant le défaut, ce message étant transmis pour diffusion sonore et/ou visuelle sur l'interface utilisateur 5 située dans l'habitacle du véhicule automobile 1 (voir figure 1).

Le module 4 peut en outre décider, dès lors que la présence d'un défaut a été détecté, ou selon le type de défaut détecté, de désactiver le système 2 d'assistance au contrôle latéral comme indiqué par la commande en pointillés sur la figure 1. En particulier, si le type de défaut est un dégonflage d'un pneumatique pour l'une des roues directrices, il peut être souhaitable de désactiver les fonctionnalités offertes par le contrôle latéral car un dégonflage de pneumatique peut fausser la calibration des capteurs 20 utilisés par le système 2, et par suite, le contrôle automatique de trajectoire.

Les deux procédés précédents ont été décrits comme étant des procédés alternatifs, ne comprenant que les étapes $S_1$ et $S_2$ en commun. En variante non représentée, on peut prévoir également de combiner ces deux procédés. Par exemple, on peut prévoir, suite à la détection à l'étape $S_2$ du procédé représenté à la figure 3 de lancer également en supplément des étapes $S_3$ et $S_4$, et dès que le véhicule automobile 1 roule sur une portion de voie de circulation de profil courbe, de réaliser les étapes S6 à S9 décrites en relation au procédé de la figure 4.

Les deux procédés dont les étapes sont illustrées sur les figures 3 et 4, ou leur combinaison, ont été décrits dans le cas non limitatif où le véhicule automobile 1 est équipé du système 2 d'assistance au contrôle latéral (cas de la figure 1). L'intérêt dans ce cas est double : d'une part, on est capable d'identifier précisément une roue présentant un défaut en situation de roulage du véhicule en utilisant directement des mesures d'angles au volant correctifs utilisés pour le contrôle latéral, et d'autre part, on peut décider, par exemple selon le type du défaut ou dès lors que la présence d'un défaut a été détectée, de désactiver la fonctionnalité liée au contrôle latéral.

Les principes de l'invention peuvent néanmoins être appliqués même dans le cas où le véhicule automobile n'est pas équipé d'un tel système d'assistance à contrôle latéral. Dans ce cas, on peut prévoir que le conducteur puisse entrer volontairement, par exemple via l'interface utilisateur 5, dans un mode de diagnostic en roulage, et que les angles au volant correctifs utilisés par le module 4 de détection de défaut soient les angles au volant directement appliqués sur le volant du véhicule par le conducteur pour recentrer son véhicule sur une portion rectiligne d'une voie de circulation, et mesurés par un capteur d'angle au volant.

**Revendications**

1. Procédé de détection de défauts liés à des roues d'un véhicule automobile en situation de roulage, comportant:

    - une première étape ($S_1$) de détermination automatique d'une première série d'angles au volant correctifs appliqués successivement pendant une première fenêtre temporelle de roulage dudit véhicule automobile sur une première portion de voie de circulation sensiblement rectiligne, lesdits angles au volant correctifs étant appliqués de manière à ce que ledit véhicule suive une trajectoire parallèle à ladite première portion de voie de circulation ;
    - une étape ($S_2$) de détection automatique de la présence d'un défaut affectant une paire de roues directrices du véhicule automobile, à partir des angles au volant correctifs de la première série ; et, le cas échéant
    - une étape ($S_3$ ; $S_8$) d'estimation d'un type de défaut associé au défaut dont la présence a été détectée ;
    - une étape ($S_4$; $S_9$) d'identification de la roue directrice de ladite paire de roues affectée par ledit défaut ; et
    - une étape ($S_5$) de génération d'un message d'alerte à l'attention du conducteur du véhicule automobile, ledit message comportant le type de défaut estimé et la roue identifiée comme présentant le défaut

    **caractérisé en ce qu'**il comporte, suite à une détection de la présence d'un défaut issue de l'étape ($S_2$) de détection automatique, une deuxième étape ($S_6$) de détermination automatique, d'une deuxième série d'angles au volant correctifs appliqués successivement pendant une deuxième fenêtre temporelle de roulage dudit véhicule automobile sur une deuxième portion de voie de circulation de profil courbe, lesdits angles au volant correctifs étant appliqués de manière à ce que ledit véhicule suive une trajectoire parallèle à ladite deuxième portion de voie de circulation, et une étape ($S_7$) de calcul d'une moyenne sur les angles au volant correctifs de la deuxième série.

2. Procédé selon la revendication 1, **caractérisé en ce que** l'étape ($S_2$) de détection automatique comprend

une étape ($S_{20}$) de calcul d'une moyenne et d'un écart-type sur les angles au volant correctifs de la première série.

3. Procédé selon la revendication 2, **caractérisé en ce que** la roue directrice affectée par ledit défaut est identifiée ($S_4$) à partir du signe de la moyenne calculée à l'étape ($S_2$) de détection automatique.

4. Procédé selon l'une quelconque des revendications 1 à 3, **caractérisé en ce que** l'étape ($S_3$) d'estimation d'un type de défaut comporte une étape ($S_{30}$) de calcul de dérivées temporelles des angles au volant correctifs de ladite première série, le type de défaut étant estimé sur la base d'une comparaison ($S_{31}$) d'une moyenne des dérivées temporelles par rapport à zéro.

5. Procédé selon la revendication 1, **caractérisé en ce que** la roue directrice affectée par ledit défaut est identifiée ($S_9$) à partir du signe de la moyenne calculée ($S_7$) sur les angles correctifs de la deuxième série.

6. Procédé selon l'une quelconque des revendications 1 à 5, **caractérisé en ce que** l'étape ($S_8$) d'estimation d'un type de défaut comporte une étape ($S_{80}$) de calcul de la dérivée temporelle des angles au volant correctifs de ladite deuxième série, le type de défaut étant estimé sur la base d'une comparaison ($S_{81}$) de ladite dérivée temporelle par rapport à zéro.

7. Procédé selon l'une quelconque des revendications précédentes, **caractérisé en ce qu'**il comporte en outre une étape de désactivation d'un système (2) embarqué d'assistance à la conduite apte à commander un contrôle latéral de la trajectoire du véhicule automobile (1) pendant une phase d'activation dudit système embarqué d'assistance à la conduite.

8. Procédé selon la revendication 7, **caractérisé en ce que** ladite désactivation est déclenchée sur la base du type de défaut estimé.

9. Procédé selon l'une quelconque des revendications 7 ou 8, **caractérisé en ce que** les angles au volant correctifs appliqués sont délivrés par ledit système (2) embarqué d'assistance à la conduite pendant la phase d'activation dudit système (2) embarqué d'assistance à la conduite.

**Patentansprüche**

1. Verfahren zur Erfassung von mit den Rädern eines Kraftfahrzeugs in einer Fahrsituation verbundenen Fehlern, das aufweist:

- einen ersten Schritt ($S_1$) der automatischen Bestimmung einer ersten Reihe von Korrekturlenkwinkeln, die nacheinander während eines ersten Fahrzeitfensters des Kraftfahrzeugs auf einen ersten im Wesentlichen geradlinigen Fahrstreifenabschnitt angewendet werden, wobei die Korrekturlenkwinkel so angewendet werden, dass das Fahrzeug einer Fahrspur parallel zum ersten Fahrstreifenabschnitt folgt;
- einen Schritt ($S_2$) der automatischen Erkennung des Vorhandenseins eines Fehlers, der sich auf ein Paar von gelenkten Rädern des Kraftfahrzeugs auswirkt, ausgehend von den Korrekturlenkwinkeln der ersten Reihe; und ggf.
- einen Schritt ($S_3$; $S_8$) der Schätzung eines Fehlertyps, der dem Fehler zugeordnet ist, dessen Vorhandensein erkannt wurde;
- einen Schritt ($S_4$; $S_9$) der Identifizierung des gelenkten Rads des Paars von Rädern, auf das sich der Fehler auswirkt; und
- einen Schritt ($S_5$) der Erzeugung einer Warnnachricht für den Fahrer des Kraftfahrzeugs, wobei die Nachricht den geschätzten Fehlertyp und das als den Fehler aufweisend identifizierte Rad aufweist;

**dadurch gekennzeichnet, dass** es nach einer vom Schritt ($S_2$) der automatischen Erkennung stammenden Erkennung des Vorhandenseins eines Fehlers einen zweiten Schritt ($S_6$) der automatischen Bestimmung einer zweiten Reihe von Korrekturlenkwinkeln, die nacheinander während eines zweiten Fahrzeitfensters des Kraftfahrzeugs auf einen zweiten Fahrstreifenabschnitt mit gekrümmtem Profil angewendet werden, wobei die Korrekturlenkwinkel so angewendet werden, dass das Fahrzeug einer Fahrspur parallel zum zweiten Fahrstreifenabschnitt folgt, und einen Schritt ($S_7$) der Berechnung eines Mittelwerts an den Korrekturlenkwinkeln der zweiten Reihe aufweist.

2. Verfahren nach Anspruch 1, **dadurch gekennzeichnet, dass** der Schritt ($S_2$) der automatischen Erkennung einen Schritt ($S_{20}$) der Berechnung eines Mittelwerts und einer Standardabweichung an den Korrekturlenkwinkeln der ersten Reihe enthält.

3. Verfahren nach Anspruch 2, **dadurch gekennzeichnet, dass** das gelenkte Rad, auf das sich der Fehler auswirkt, ausgehend vom Vorzeichen des im Schritt ($S_2$) der automatischen Erkennung berechneten Mittelwerts identifiziert wird ($S_4$).

4. Verfahren nach einem der Ansprüche 1 bis 3, **dadurch gekennzeichnet, dass** der Schritt ($S_3$) der Schätzung eines Fehlertyps einen Schritt ($S_{30}$) der Berechnung zeitlicher Ableitungen der Korrekturlenkwinkel der ersten Reihe aufweist, wobei der Fehlertyp auf der Basis eines Vergleichs ($S_{31}$) eines Mittelwerts der zeitlichen Ableitungen in Bezug auf Null geschätzt wird.

5. Verfahren nach Anspruch 1, **dadurch gekennzeichnet, dass** das gelenkte Rad, auf das sich der Fehler auswirkt, ausgehend vom Vorzeichen des berechneten Mittelwerts ($S_7$) an den Korrekturwinkeln der zweiten Reihe identifiziert wird ($S_9$).

6. Verfahren nach einem der Ansprüche 1 bis 5, **dadurch gekennzeichnet, dass** der Schritt ($S_8$) der Schätzung eines Fehlertyps einen Schritt ($S_{80}$) der Berechnung der zeitlichen Ableitung der Korrekturlenkwinkel der zweiten Reihe aufweist, wobei der Fehlertyp auf der Basis eines Vergleichs ($S_{81}$) der zeitlichen Ableitung in Bezug auf Null geschätzt wird.

7. Verfahren nach einem der vorhergehenden Ansprüche, **dadurch gekennzeichnet, dass** es außerdem einen Schritt der Deaktivierung eines eingebauten Fahrassistenzsystems (2) aufweist, das fähig ist, eine seitliche Kontrolle der Fahrspur des Kraftfahrzeugs (1) während einer Aktivierungsphase des eingebauten Fahrassistenzsystems zu steuern.

8. Verfahren nach Anspruch 7, **dadurch gekennzeichnet, dass** die Deaktivierung auf der Basis des geschätzten Fehlertyps ausgelöst wird.

9. Verfahren nach einem der Ansprüche 7 oder 8, **dadurch gekennzeichnet, dass** die angewendeten Korrekturlenkwinkel vom eingebauten Fahrassistenzsystem (2) während der Aktivierungsphase des eingebauten Fahrassistenzsystems (2) geliefert werden.

**Claims**

1. Method for detecting faults related to wheels of a motor vehicle in a driving situation, comprising:

   - a first step ($S_1$) of automatically determining a first series of corrective steering wheel angles successively applied during a first time window of driving said motor vehicle on a first portion of a substantially rectilinear traffic lane, said corrective steering wheel angles being applied so that said vehicle follows a path parallel to said first traffic lane portion;
   - a step ($S_2$) of automatically detecting the presence of a fault affecting a pair of steered wheels of the motor vehicle, from the corrective steering wheel angles of the first series; and, optionally,
   - a step ($S_3$; $S_8$) of estimating a type of fault associated with the fault whose presence has been detected;

   - a step ($S_4$; $S_9$) of identifying the steered wheel of said pair of wheels affected by said fault; and
   - a step ($S_5$) of generating a warning message for the attention of the driver of the motor vehicle, said message comprising the estimated type of fault and the wheel identified as having the fault, **characterized in that** it comprises, following a detection of the presence of a fault resulting from the automatic detection step ($S_2$), a second step ($S_6$) of automatically determining a second series of corrective steering wheel angles successively applied during a second time window of driving said motor vehicle on a second traffic lane portion of curved profile, said corrective steering wheel angles being applied so that said vehicle follows a path parallel to said second traffic lane portion, and a step ($S_7$) of calculating an average on the corrective steering wheel angles of the second series.

2. Method according to Claim 1, **characterized in that** the automatic detection step ($S_2$) comprises a step ($S_{20}$) of calculating an average and a standard deviation on the corrective steering wheel angles of the first series.

3. Method according to Claim 2, **characterized in that** the steered wheel affected by said fault is identified ($S_4$) from the sign of the average calculated in the automatic detection step ($S_2$) .

4. Method according to any one of Claims 1 to 3, **characterized in that** the step ($S_3$) of estimating a type of fault comprises a step ($S_{30}$) of calculating time derivatives of the corrective steering wheel angles of said first series, the type of fault being estimated on the basis of a comparison ($S_{31}$) of an average of the time derivatives with respect to zero.

5. Method according to Claim 1, **characterized in that** the steered wheel affected by said fault is identified ($S_9$) from the sign of the average calculated ($S_7$) on the corrective angles of the second series.

6. Method according to any one of Claims 1 to 5, **characterized in that** the step ($S_8$) of estimating a type of fault comprises a step ($S_{80}$) of calculating the time derivative of the corrective steering wheel angles of said second series, the type of fault being estimated on the basis of a comparison ($S_{81}$) of said time derivative with respect to zero.

7. Method according to any one of the preceding claims, **characterized in that** it further comprises a step of deactivating an on-board driver assistance system (2) capable of commanding a lateral control of the path of the motor vehicle (1) during an activation phase of said on-board driver assistance sys-

**EP 4 028 299 B1**

tem.

8. Method according to Claim 7, **characterized in that** said deactivation is triggered on the basis of the estimated type of fault.

9. Method according to either one of Claims 7 and 8, **characterized in that** the corrective steering wheel angles applied are delivered by said on-board driver assistance system (2) during the activation phase of said on-board driver assistance system (2).

# FIG.1

# FIG.2

Route droite
$\{SW\_angle_1, SW\_angle_2, \dots SW\_angle_N\}$ $S_1$

$S_2$

$$\overline{SW\_angle} = \frac{\sum_{i=1}^{N} SW\_angle_i}{N}$$ $S_{20}$

$$\sigma = \sqrt{\frac{\sum_{i=1}^{N}(SW_{angle_i} - \overline{SW_{angle}})^2}{N}}$$

$S_{21}$

$\overline{SW\_angle} \pm \sigma > \varepsilon$ ? — Oui

$S_3$

$$dSW_i = \frac{SW\_angle_{i+1} - SW\_angle_i}{\Delta T}$$ $S_{30}$

$S_{31}$

Non — $\overline{dSW} \neq 0$ ? — Oui

Type = dégonflage | Type = carrossage négatif

$S_4$

$S_{41}$

Non — $\overline{SW\_angle} > 0$? — Oui

Côté = droit | Côté = gauche

Alerte défaut (Type, côté) $S_5$

# FIG.3

$$S_1$$

$$S_2$$

Route courbe
$\{SW\_angle_1, SW\_angle_2, \ldots SW\_angle_P\}$

$$S_6$$

$$\overline{SW\_angle} = \frac{\sum_{i=1}^{P} SW\_angle_i}{P}$$

$$S_7$$

$$dSW_i = \frac{SW\_angle_{i+1} - SW_{angle_i}}{\Delta T}$$

$$S_{80}$$

$$S_8$$

Non $\qquad \overline{dSW} \neq 0$ ? $\qquad$ Oui

$$S_{81}$$

Type = dégonflage

Type = carrossage positif

Non $\qquad \overline{SW\_angle} > 0$? $\qquad$ Oui

$$S_{91}$$

$$S_9$$

Côté = droit

Côté = gauche

Alerte défaut (Type, côté)

$$S_5$$

**FIG.4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20130253767 A